# EUROPEAN PATENT SPECIFICATION

(11) **EP 0 778 867 B1**
(45) Date of publication and mention of the grant of the patent: **15.09.1999**
(21) Application number: 95927213.9
(22) Date of filing: 21.07.1995
(51) Int. Cl.: C08L 67/00, C08L 67/04, C08L 77/12, C08L 79/08

(54) **LIQUID CRYSTALLINE POLYMER COMPOSITION**
FLÜSSIGKRISTALLINE HARZZUSAMMENSETZUNG
COMPOSITION A BASE DE POLYMERE CRISTALLIN LIQUIDE

(30) Priority: 31.08.1994 US 298992
(43) Date of publication of application: 18.06.1997
(73) Proprietor: E.I. DU PONT DE NEMOURS AND COMPANY, Wilmington Delaware 19898 (US)
(72) Inventor: WAGGONER, Marion, Glen, Hockessin, DE 19707-9803 (US)
(74) Representative: Jones, Alan John
(86) International application number: US9508969
(87) International publication number: WO9606888

(56) References cited:
- EP-A- 0 111 179
- EP-A- 0 462 844
- JP-A- 1 292 057
- US-A- 3 647 920
- DATABASE WPI Week 9002, Derwent Publications Ltd., London, GB; AN 90-011669 & JP,A,1 292 057 (UENO PHARMACEUTICAL) 24 November 1989
- CHEMICAL ABSTRACTS, vol. 119, no. 10, 6 September 1993 Columbus, Ohio, US; abstract no. 99421, IVANOV, V. E. ET AL 'Structurization of lubricants by liquid crystalline compounds' & KHIM. TEHKNOL. TOPL. MASEL, vol. 2 , 1993 pages 17-18,

## Description

### FIELD OF THE INVENTION

The present invention relates to a composition comprising an aromatic liquid crystalline polymer (LCP) and a low molecular weight polyethylene (PE) which acts as a lubricant.

### TECHNICAL BACKGROUND

Thermotropic liquid crystalline polymers are useful as molding resins for a variety of applications. This is due to the desirable properties that many of these polymers possess, such as good moldability, low flammability, high temperature resistance, good physical properties. For electrical applications, such as electrical connectors, low flammability or resistance to burning is important. Further, in many electrical applications, the parts are intricate and have thin walls. As such, these parts are sometimes difficult to eject from the mold. Internal lubricants (sometimes called mold release agents) are useful to aid in the ejection of such parts from the mold. For a discussion of such lubricants, see H. Mark, et al., Ed., Encyclopedia of Polymer Science and Engineering, Vol. 14, John Wiley & Sons, New York, 1988, p. 411-421.

While internal lubricants are generally desirable in many applications, it is preferable that the desired properties of the LCP are degraded as little as possible. It has been found that low molecular weight polyethylene (often called a "wax") acts as a lubricant in LCPs. Surprisingly, even though polyethylene itself burns quite readily, its addition to an LCP does not significantly degrade the low flammability properties of the LCP.

### SUMMARY OF THE INVENTION

This invention relates to a composition comprising an aromatic liquid crystalline polymer and from 0.05 to 2.5 percent by weight of said aromatic liquid crystalline polymer of polyethylene, said polyethylene having a number average molecular weight within the range between 1,000 to 10,000.

### DETAILS OF THE INVENTION

The LCPs useful herein are aromatic LCPs. By an "aromatic" LCP is meant that the backbone of the polymer is composed of aromatic rings and functional groups such as esters, amides and imides. There are no aliphatic or cycloaliphatic groups which are part of the main chain. However, such groups may be substituted onto the main chain as side groups. For instance, in an LCP which is at least partially a polyester, repeat units may be derived from t-butylhydroquinone, methylhydroquinone, phenethylhydroquinone, methylterephthalic acid, t-butyl-4-hydroxybenzoic acid.

Preferred aromatic LCPs are polyesters, poly(imide-esters) and poly(amide-esters), with polyesters being especially preferred. These types of polymers are well known to the artisan, see for instance U. S. Patents 4,900,804, 4,851,497, 4,067,852, 4,083,832, 4,727,131, 4,727,129, 4,762,907, 4,664,972, 4,118,372, 4,684,712, 4,522,974, 4,473,682 4,161,470 and 5,110,896. Preferred LCPs may contain repeat units derived from one or more of 4-hydroxybenzoic acid, 6-hydroxynapthoic acid, terephthalic acid, isophthalic acid, 2,6-naphthalene dicarboxylic acid, 4,4'-bibenzoic acid, hydroquinone, 4,4-biphenol, resorcinol, 2,6-dihydroxynaphthalene, substituted hydroquinones including chlorohydroquinone, methylhydroquinone, t-butylhydroquinone, phenylhydroquinone, and phenethylhydroquinone. Especially preferred polymers include polymers consisting essentially of
(a) structure (I), 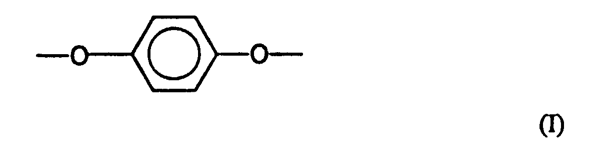
(b) structure (II), 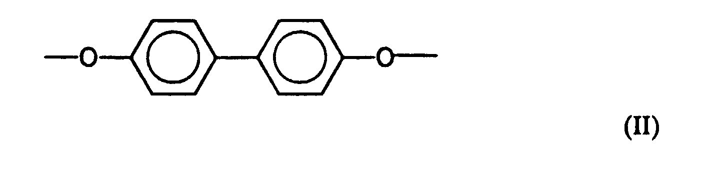
(c) structure (III), 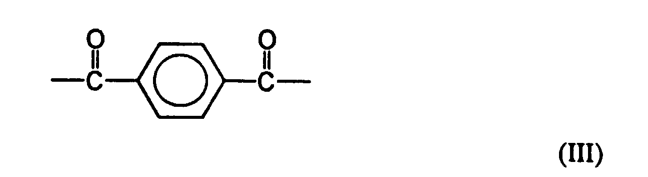
(d) structure (IV), 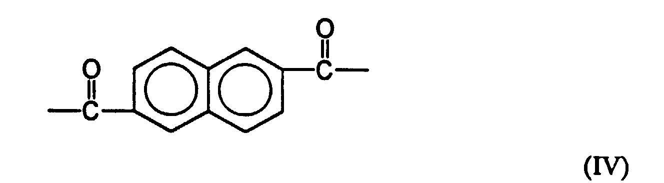 and
(e) structure (V) 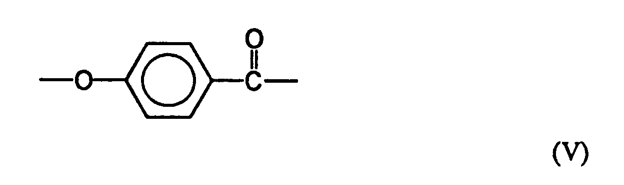 wherein the molar ratio of (I):(II) ranges from 0:100 to 100:0, wherein the molar ratio of (III):(IV) ranges from 85:15 to 15:85, wherein the molar ratio of the total of (I) and (II) to the total of (III) and (IV) is substantially 1:1, and further wherein there are 100 to 600 moles of (V) per 100 moles of (I) plus (II);
or polymers consisting essentially of the following repeat units:
(a) structure (VI) 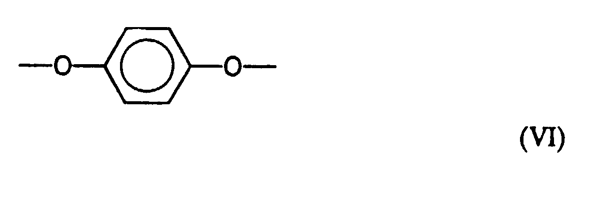 and/or
structure (VII) 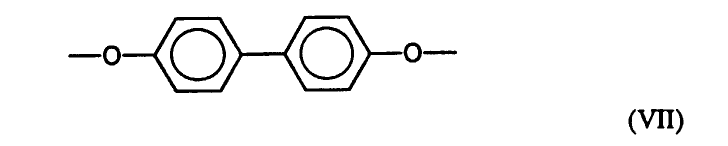
(b) structure (VIII) 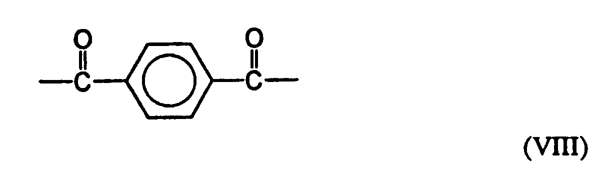
(c) structure (IX) 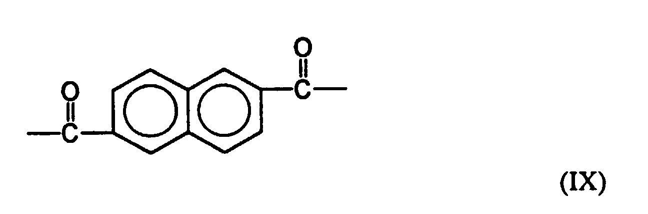
(d) structure (X) 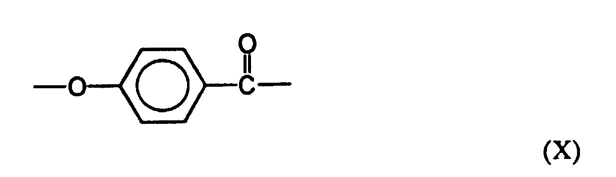 and
(e) structure (XI) 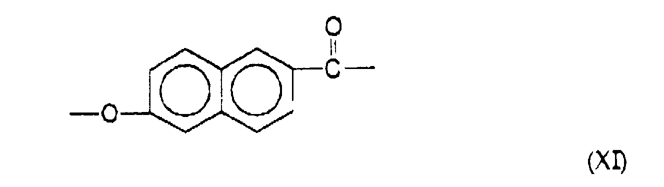 wherein the molar ratio of (VI):(VII) ranges from 0:100 to 100:0, the molar ratio of (VIII):(IX) ranges from 25:75 to 90:10, the molar ratio of the sum of (VI) and (VII) to the sum of (VIII) and (IX) is substantially 1:1, the molar ratio of (X):(XI) ranges from 97:3 to 50:50, and the number of moles of (X) plus (XI) ranges from 100 to 600 per 100 moles of (VI) plus (VII). Especially preferred polymers also include copolymers of p-hydroxybenzoic acid and 6-hydroxynapthoic acid.

The PE useful herein has a molecular weight within the range between 1,000 to 10,000, preferably 1,500 to 4,000. Low pressure polymerized (high density), polar PE is preferred for use in the present invention. Such PEs are made by oxidation of PE which introduces polar functional groups, such as carboxyl groups, into the PE. Such oxidized PEs are commercially available, such as those from Hoechst Celanese Corp., Somerville, NJ, U.S.A. under the designation "Hoechst Wax PED".

The amount of PE present in the present invention generally ranges from 0.05 to 2.5 percent by weight of the LCP, preferably 0.1 to 2.0 percent by weight, and most preferably 0.2 to 1.0 percent by weight. Other materials usually found in LCP molding compositions may also be present, such as fillers, including glass, clay, talc and other minerals, and carbon black, pigments and antioxidants. Preferred fillers are glass fiber, talc, titanium dioxide and carbon black, and an especially preferred filler is glass fiber.

Flammability or flame resistance properties reported herein were measured by UL-94, revised as of May 14, 1993, and published by Underwriters Laboratories, Inc., Melville, NY, U.S.A. It is preferred that the flammability (as measured by the total after flame time for any condition set) of the compositions not containing PE is increased by less than 50% when the PE is added, more preferably less than 25%, and especially preferably increased less than 10%. It is also preferred that the overall UL-94 rating under the particular test conditions used is the same or better (less flammable rating) for the PE containing composition compared to the composition without PE. It is particularly preferred if the PE containing composition has a UL-94 rating of V-0.

The PE containing LCP compositions claimed herein may be made by standard methods. For instance these materials (and others to be in the composition) may be mixed together in a single or twin screw extruder. The composition may be then directly melt formed or formed into pellets for later use. Melt forming may be done by extrusion or injection molding, for example, and the latter is preferred. Such formed parts are useful as films, or as molded parts in the automotive, electronic or aerospace applications. As mentioned above, the composition is particularly useful for electronic parts, particularly electronic connectors.

### EXAMPLES 1-3

The LCP used in these Examples had the composition (structures shown above, in mole percent) (I), 9.6%; (II), 9.6%; (III), 13.5%; (IV), 5.8%; and (V), 61.5% (see U.S. Patent 5,110,896). The fiberglass used was Owens-Corning Fiberglass Corp., grade 408. The polyethylene was reported to be an oxidized low pressure polyethylene and was obtained from Hoechst Celanese Corp., Somerville, NJ, U.S.A. as grade PED 521. It reportedly had a drop point of about 105°C, an acid value of about 35 mg KOH/g and a density of about 0.95 at 20°C, using test methods specified by Hoechst Celanese Corp.

The materials were mixed on a Werner and Pfleiderer 28 mm twin screw extruder, in which the zone temperatures (rear to front) were approximately were 255°C, 290°C, 290°C, 290°C, 300°C and 345°C (die). A one hole die was used, and pellets were made. The pellets were then injection molded into test bars, and temperatures in the injection molding machine (rear to front) were approximately 325°C, 320°C, 330°C and 335°C-347°C.

Compositions (weight percents are based on the total amount of everything in the LCP compositions), tensile strengths and elongations, and UL-94 burn times and overall ratings are given in Table 1, along with values for Comparative Example A, which contained no PE. Tensile properties were determined with bars that were 3.18 mm (1/8") thick, while the UL-94 tests were done with bars that were 0.79 mm (1/32") thick, with the burns being done on dry, as-molded, bars. Tensile tests were performed by the procedure of ASTM D638.

**TABLE 1**

| Ex. No. | wt % PE | wt % Fiberglass | Tensile Strength (MPa) | Elong. % | Burn Time (sec) | UL-94 Rating |
|---|---|---|---|---|---|---|
| A | 0.0 | 30 | 116 | 2.8 | 25 | V-0 |
| 1 | 0.5 | 30 | 107 | 3.0 | 26 | V-0 |
| 2 | 1.0 | 30 | 106 | 3.0 | 24 | V-0 |
| 3 | 1.5 | 30 | 103 | 2.9 | 25 | V-0 |

### EXAMPLE 4

Four LCP compositions were molded, three containing low molecular weight PE, and Comparative Example B not containing PE. The same LCP, PE, and glass was used as in Examples 1-3. The talc used was Supra® Talc (Cyprus Minerals), and the carbon black used was Velvetine® carbon black. The compositions are given in Table 2, where the weight percents are based on the totals of all components of the compositions.

Electrical connectors were injection molded of each sample. Sample B had a minimum cycle time of 19 sec, and the part was deformed by the ejector pin when ejected. Samples 4A and 4B both had minimum cycle times of 14.9 sec, and had no deformation from the ejector pin. Sample 4C had a minimum cycle time of 15.9 sec and showed no deformation caused by the ejector pin. These particular results illustrate the improved mold release properties when PE was present.

**TABLE 2**

| Sample | % LCP | % PE | % Fiberglass | % Carbon Black | % Talc |
|---|---|---|---|---|---|
| B | 70 | 0 | 30 | 0 | 0 |
| 4A | 69.5 | 0.5 | 30 | 0 | 0 |
| 4B | 69 | 1.0 | 30 | 0 | 0 |
| 4C^{a} | 61.5 | 0.5 | 23.3 | 13 | 13.3 |

| | | | | | |
|---|---|---|---|---|---|
| ^{a} Made by pellet blending 1 part by weight of a sample containing 68.5% LCP, 1.5% polyethylene and 30% glass fiber, and 2 parts by weight of a sample containing 58% LCP, 20% glass fiber, 20% talc and 2.0% carbon black. | | | | | |

## Claims

1. A composition consisting essentially of a thermotropic aromatic liquid crystalline polymer and from 0.05 to 2.5 percent by weight of said aromatic liquid crystalline polymer of polyethylene, said polyethylene having a molecular weight within the range between 1,000 and 10,000, other components that may be present in said composition being fillers, pigments and antioxidants, said composition, with and without said polyethylene, having a flammability rating of V-0 under the test conditions of UL-94, as revised on May 14, 1993, at a bar thickness of 0.79 mm (1/32 inch).

2. The composition as recited in Claim 1 wherein said polyethylene has a molecular weight within the range between 1,500 to 4,000.

3. The composition as recited in Claim 1 wherein said polyethylene is polar.

4. The composition as recited in Claim 3 wherein said polyethylene is made by low pressure polymerization.

5. The composition as recited in Claim 1 wherein the amount of said polyethylene is 0.1 to 2.0 percent by weight of said aromatic liquid crystalline polymer.

6. The composition as recited in Claim 4 wherein the amount of said polyethylene is 0.2 to 1.0 percent by weight of said aromatic liquid crystalline polymer.

7. The composition as recited in Claim 1 wherein said aromatic liquid crystalline polymer contains repeat units derived from one or more of 4-hydroxybenzoic acid, 6-hydroxynapthoic acid, terephthalic acid, isophthalic acid, 2,6-naphthalene dicarboxylic acid, 4,4'-bibenzoic acid, hydroquinone, chlorohydroquinone, methylhydroquinone, t-butylhydroquinone, phenylhydroquinone, phenethylhydroquinone, 4,4-biphenol, resorcinol, or 2,6-dihydroxynaphthalene.

8. The composition as recited in Claim 6 wherein said aromatic liquid crystalline polymers contains repeat units derived from one or more of 4-hydroxybenzoic acid, 6-hydroxynapthoic acid, terephthalic acid, isophthalic acid, 2,6-naphthalene dicarboxylic acid, 4,4'-bibenzoic acid, hydroquinone, chlorohydroquinone, methylhydroquinone, t-butylhydroquinone, phenylhydroquinone, phenethylhydroquinone, 4,4-biphenol, resorcinol, or 2,6-dihydroxynaphthalene.

9. The composition as recited in Claim 1 wherein said aromatic liquid crystalline polymer consists essentially of the repeat units:
(a) structure (I), 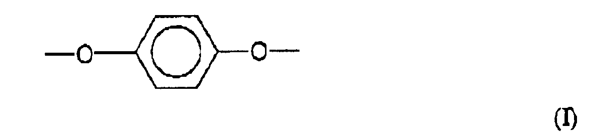
(b) structure (II), 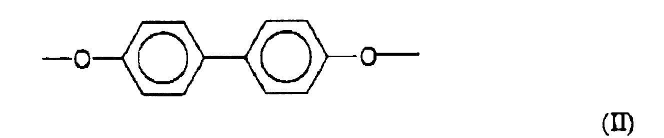
(c) structure (III), 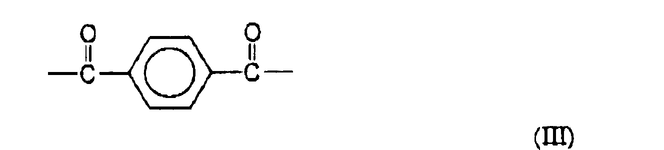
(d) structure (IV), 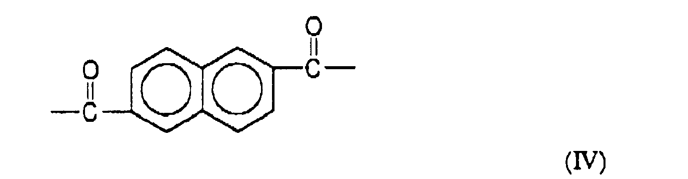 and
(e) structure (V) 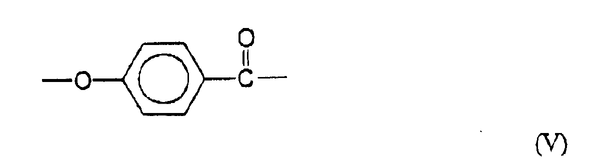 wherein the molar ratio of (I):(II) ranges from 0:100 to 100:0, wherein the molar ratio of (III):(IV) ranges from 85:15 to 15:85, wherein the molar ratio of the total of (I) and (II) to the total of (III) and (IV) is substantially 1:1, and further wherein there are 100 to 600 moles of (V) per 100 moles of (I) plus (II);

10. The composition as recited in Claim 1 wherein said aromatic liquid crystalline polymer consists essentially of the repeat units:
(a) structure (VI) 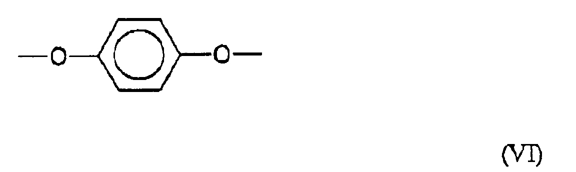 and
structure (VII) 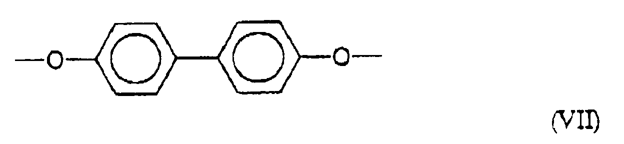
(b) structure (VIII) 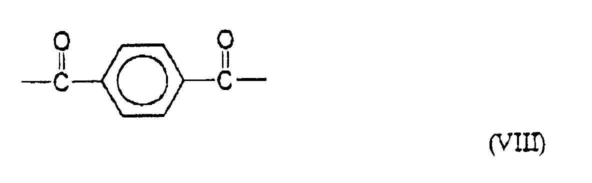
(c) structure (IX) 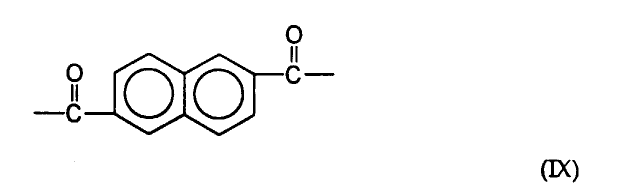
(d) structure (X) 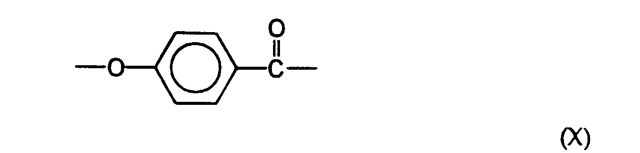 and
(e) structure (XI) 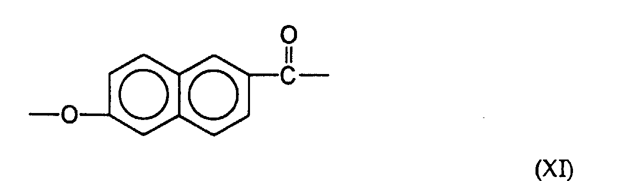
wherein the molar ratio of (VI):(VII) ranges from 0:100 to 100:0, the molar ratio of (VIII):(IX) ranges from 25:75 to 90:10, the molar ratio of the sum of (VI) and (VII) to the sum of (VIII) and (IX) is substantially 1:1, the molar ratio of (X):(XI) ranges from 97:3 to 50:50, and the number of moles of (X) plus (XI) ranges from 100 to 600 per 100 moles of (VI) plus (VII).

11. The composition as recited in Claim 6 wherein said aromatic liquid crystalline polymer consists essentially of the repeat units:
(a) structure (I), 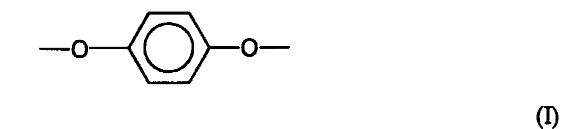
(b) structure (II), 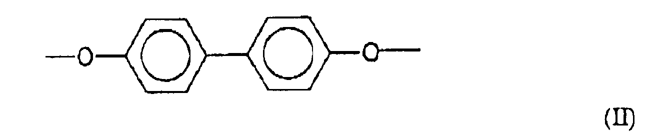
(c) structure (III), 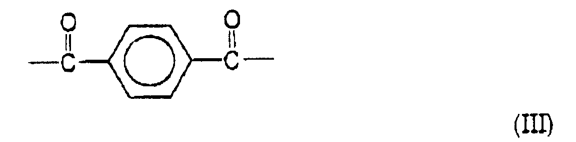
(d) structure (IV), 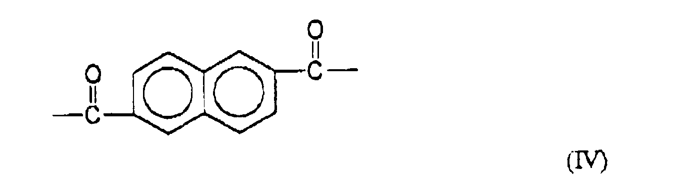 and
(e) structure (V) 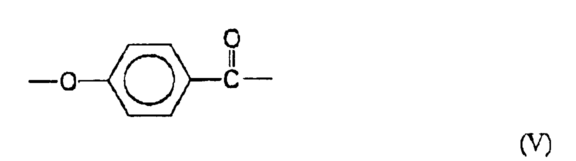
wherein the molar ratio of (I):(II) ranges from 0:100 to 100:0, wherein the molar ratio of (III):(IV) ranges from 85:15 to 15:85, wherein the molar ratio of the total of (I) and (II) to the total of (III) and (IV) is substantially 1:1, and further wherein there are 100 to 600 moles of (V) per 100 moles of (I) plus (II);

12. The composition as recited in Claim 6 wherein said aromatic liquid crystalline polymer consists essentially of the repeat units:
(a) structure (VI) 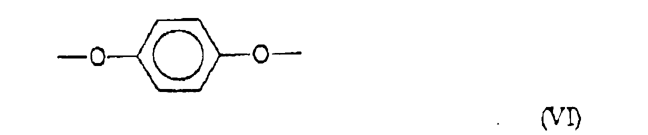 and
structure (VII) 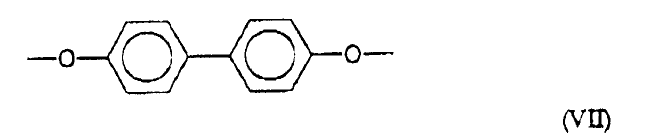
(b) structure (VIII) 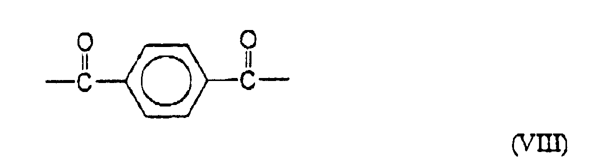
(c) structure (IX) 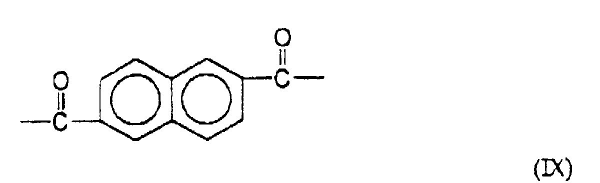
(d) structure (X) 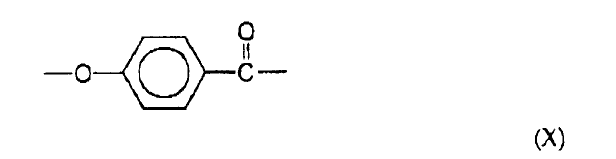 and
(e) structure (XI) 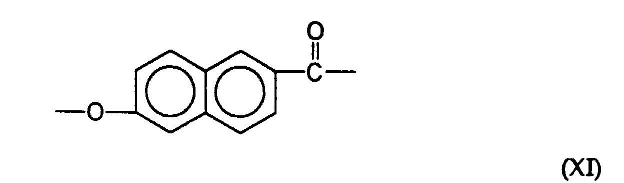
wherein the molar ratio of (VI):(VII) ranges from 0:100 to 100:0, the molar ratio of (VIII):(IX) ranges from 25:75 to 90:10, the molar ratio of the sum of (VI) and (VII) to the sum of (VIII) and (IX) is substantially 1:1, the molar ratio of (X):(XI) ranges from 97:3 to 50:50, and the number of moles of (X) plus (XI) ranges from 100 to 600 per 100 moles of (VI) plus (VII).

13. The composition as recited in Claim 1 wherein said aromatic liquid crystalline polymer is selected from the group consisting of a polyester, a poly(imide-ester) and a poly(amide-ester).

14. The composition as recited in Claim 1 further comprising glass fiber.

15. The composition as recited in Claim 1 further comprising a filler selected from the group consisting of glass fiber, carbon black, titanium dioxide, talc and combinations thereof.

16. The composition as recited in Claim 1 wherein said aromatic liquid crystalline polymer is a polyester.

## Patentansprüche

1. Zusammensetzung, bestehend im wesentlichen aus einem thermotropen aromatischen flüssigkristallinen Polymer und 0,05 bis 2,5 Gew.-% des aromatischen flüssigkristallinen Polymers an Polyethylen, wobei das Polyethylen ein Molekulargewicht im Bereich zwischen 1000 und 10000 hat, wobei andere Komponenten, die in der Zusammensetzung vorhanden sein können, Füllstoffe, Pigmente und Antioxidantien sind, wobei die Zusammensetzung, mit und ohne das Polyethylen, unter den Testbedingungen von UL-94, wie sie am 14. Mai 1993 revidiert wurden, bei einer Stabdicke von 0,79 mm (1/32 Inch) eine Entflammbarkeitsbewertung von V-0 hat.

2. Zusammensetzung nach Anspruch 1, wobei das Polyethylen ein Molekulargewicht im Bereich zwischen 1500 und 4000 hat.

3. Zusammensetzung nach Anspruch 1, wobei das Polyethylen polar ist.

4. Zusammensetzung nach Anspruch 3, wobei das Polyethylen durch Niederdruckpolymerisation hergestellt ist.

5. Zusammensetzung nach Anspruch 1, wobei der Anteil des Polyethylens 0,1 bis 2,0 Gew.-% des aromatischen flüssigkristallinen Polymers beträgt.

6. Zusammensetzung nach Anspruch 4, wobei der Anteil des Polyethylens 0,2 bis 1,0 Gew.-% des aromatischen flüssigkristallinen Polymers beträgt.

7. Zusammensetzung nach Anspruch 1, wobei das aromatische flüssigkristalline Polymer Grundeinheiten enthält, die aus einem oder mehreren von 4-Hydroxybenzoesäure, 6-Hydroxynaphthoesäure, Terephthalsäure, Isophthalsäure, 2,6-Naphthalindicarbonsäure, 4,4'-Bibenzoesäure, Hydrochinon, Chlorhydrochinon, Methylhydrochinon, t-Butylhydrochinon, Phenylhydrochinon, Phenethylhydrochinon, 4,4'-Biphenol, Resorcinol oder 2,6-Dihydroxynaphthalin erhalten sind.

8. Zusammensetzung nach Anspruch 6, wobei das aromatische flüssigkristalline Polymer Grundeinheiten enthält, die aus einem oder mehreren von 4-Hydroxybenzoesäure, 6-Hydroxynaphthoesäure, Terephthalsäure, Isophthalsäure, 2,6-Naphthalindicarbonsäure, 4,4'-Bibenzoesäure, Hydrochinon, Chlorhydrochinon, Methylhydrochinon, t-Butyl hydrochinon, Phenylhydrochinon, Phenethylhydrochinon, 4,4'-Biphenol, Resorcinol oder 2,6-Dihydroxynaphthalin erhalten sind.

9. Zusammensetzung nach Anspruch 1, wobei das aromatische flüssigkristalline Polymer im wesentlichen aus den Grundeinheiten besteht:
(a) Struktur (I), 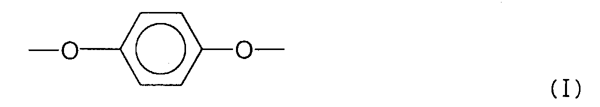
(b) Struktur (II), 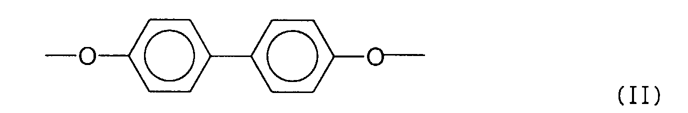
(c) Struktur (III), 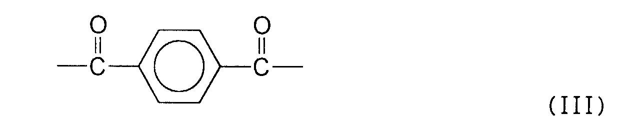
(d) Struktur (IV), 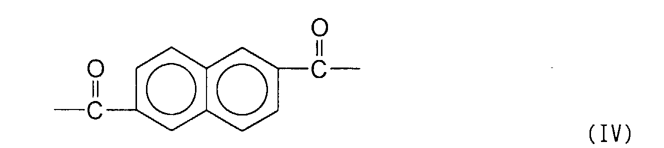 und
(e) Struktur (V) 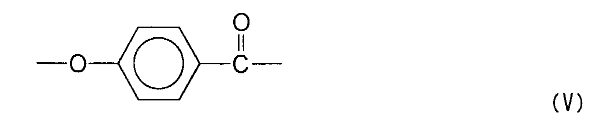
wobei das Molverhältnis von (I):(II) im Bereich von 0:100 bis 100:0 liegt, wobei das Molverhältnis von (III):(IV) im Bereich von 85:15 bis 15:85 liegt, wobei das Molverhältnis der Gesamtmenge von (I) und (II) zu der Gesamtmenge von (III) und (IV) im wesentlichen 1:1 beträgt, und wobei es weiterhin 100 bis 600 Mole von (V) pro 100 Mole von (I) plus (II) gibt.

10. Zusammensetzung nach Anspruch 1, wobei das aromatische flüssigkristalline Polymer im wesentlichen aus den Grundeinheiten besteht:
(a) Struktur (VI) 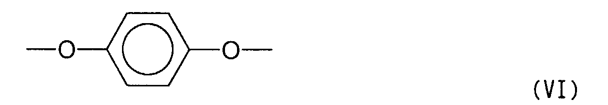 und
Struktur (VII) 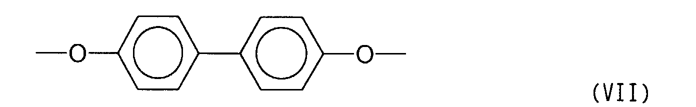
(b) Struktur (VIII) 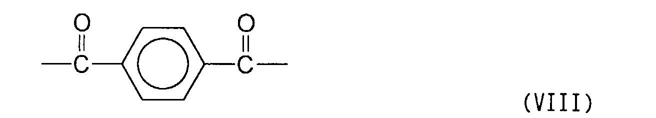
(c) Struktur (IX) 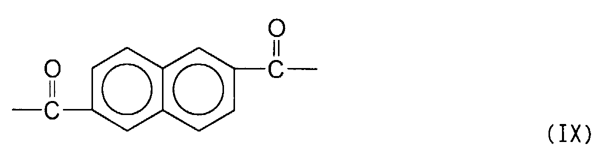
(d) Struktur (X) 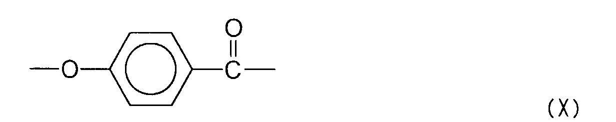 und
(e) Struktur (XI) 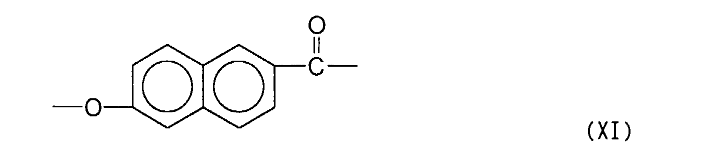
wobei das Molverhältnis von (VI):(VII) im Bereich von 0:100 bis 100:0 liegt, das Molverhältnis von (VIII):(IX) im Bereich von 25:75 bis 90:10 liegt, das Molverhältnis der Summe von (VI) und (VII) zu der Summe von (VIII) und (IX) im wesentlichen 1:1 beträgt, das Molverhältnis von (X):(XI) im Bereich von 97:3 bis 50:50 liegt und die Anzahl der Mole von (X) plus (XI) im Bereich von 100 bis 600 pro 100 Mole von (VI) plus (VII) liegt.

11. Zusammensetzung nach Anspruch 6, wobei das aromatische flüssigkristalline Polymer im wesentlichen aus den Grundeinheiten besteht:
(a) Struktur (I), 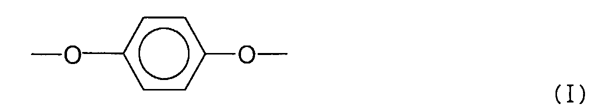
(b) Struktur (II), 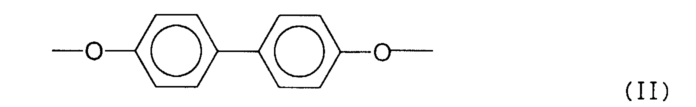
(c) Struktur (III), 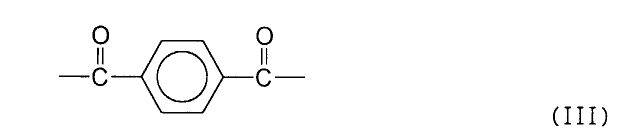
(d) Struktur (IV), 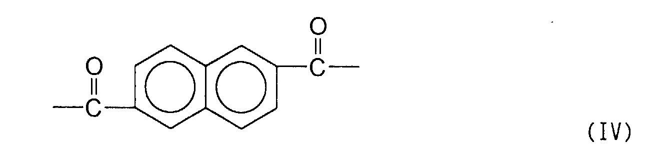 und
(e) Struktur (V) 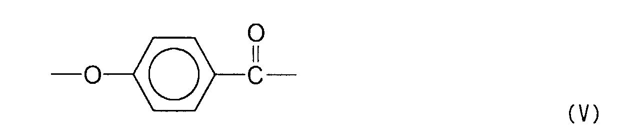
wobei das Molverhältnis von (I):(II) im Bereich von 0:100 bis 100:0 liegt, wobei das Molverhältnis von (III):(IV) im Bereich von 85:15 bis 15:85 liegt, wobei das Molverhältnis der Gesamtmenge von (I) und (II) zu der Gesamtmenge von (III) und (IV) im wesentlichen 1:1 beträgt und wobei es weiterhin 100 bis 600 Mole von (V) pro 100 Mole von (I) plus (II) gibt.

12. Zusammensetzung nach Anspruch 6, wobei das aromatische flüssigkristalline Polymer im wesentlichen aus den Grundeinheiten besteht:
(a) Struktur (VI) 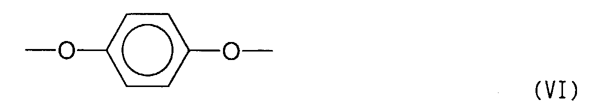 und
Struktur (VII) 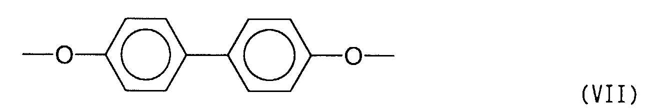
(b) Struktur (VIII) 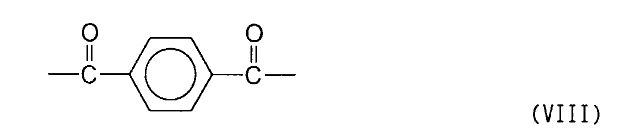
(c) Struktur (IX) 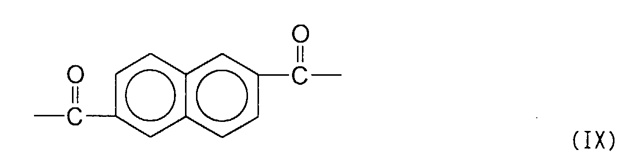
(d) Struktur (X) 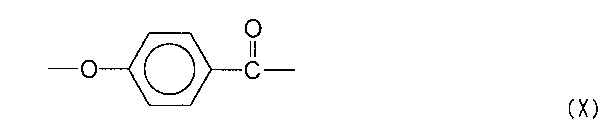 und
(e) Struktur (XI) 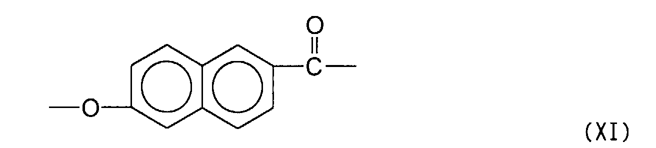
wobei das Molverhältnis von (VI):(VII) im Bereich von 0:100 bis 100:0 liegt, das Molverhältnis von (VIII):(IX) im Bereich von 25:75 bis 90:10 liegt, das Molverhältnis der Summe von (VI) und (VII) zu der Summe von (VIII) und (IX) im wesentlichen 1:1 beträgt, das Molverhältnis von (X):(XI) im Bereich von 97:3 bis 50:50 liegt und die Anzahl der Mole von (X) plus (XI) im Bereich von 100 bis 600 pro 100 Mole von (VI) plus (VII) liegt.

13. Zusammensetzung nach Anspruch 1, wobei das aromatische flüssigkristalline Polymer aus der Gruppe, bestehend aus einem Polyester, einem Poly(imidester) und einem Poly(amidester), ausgewählt ist.

14. Zusammensetzung nach Anspruch 1, weiterhin umfassend Glasfasern.

15. Zusammensetzung nach Anspruch 1, weiterhin umfassend einen Füllstoff, ausgewählt aus der Gruppe, bestehend aus Glasfasern, Ruß, Titandioxid, Talk und Kombinationen davon.

16. Zusammensetzung nach Anspruch 1, wobei das aromatische flüssigkristalline Polymer ein Polyester ist.

## Revendications

1. Composition essentiellement constituée par un polymère cristallin liquide aromatique thermotropique et de 0,05 à 2,5% en poids, par rapport audit polymère cristallin liquide aromatique, de polyéthylène, ledit polyéthylène ayant un poids moléculaire dans la gamme entre 1000 et 10000, d'autres constituants qui peuvent être présents dans ladite composition étant des charges, des pigments et des antioxydants, ladite composition, avec ou sans ledit polyéthylène, ayant un indice d'inflammabilité de V-0 dans les conditions d'essai de UL-94, telles que révisées le 14 mai 1993, à une épaisseur de barre de 0,79 mm (1/32 pouce).

2. Composition selon la revendication 1, dans laquelle ledit polyéthylène a un poids moléculaire dans la gamme de 1500 à 4000.

3. Composition selon la revendication 1, dans laquelle ledit polyéthylène est polaire.

4. Composition selon la revendication 3, dans laquelle ledit polyéthylène est préparé par polymérisation à basse pression.

5. Composition selon la revendication 1, dans laquelle la quantité dudit polyéthylène est de 0,1 à 2,0% en poids par rapport audit polymère cristallin liquide aromatique.

6. Composition selon la revendication 4, dans laquelle la quantité dudit polyéthylène est de 0,2 à 1,0% en poids par rapport audit polymère cristallin liquide aromatique.

7. Composition selon la revendication 1, dans laquelle ledit polymère cristallin liquide aromatique contient des unités répétées provenant d'un ou plusieurs composés parmi l'acide 4-hydroxybenzoïque, l'acide 6-hydroxynaphtoïque, l'acide téréphtalique, l'acide isophtalique, l'acide 2,6-naphtalènedicarboxylique, l'acide 4,4'-bibenzoïque, l'hydroquinone, la chlorohydroquinone, la méthylhydroquinone, la t-butylhydroquinone, la phénylhydroquinone, la phénéthylhydroquinone, le 4,4'-biphénol, le résorcinol ou le 2,6-dihydroxynaphtalène.

8. Composition selon la revendication 6, dans laquelle ledit polymère cristallin liquide aromatique contient des unités répétées provenant d'un ou plusieurs composés parmi l'acide 4-hydroxybenzoïque, l'acide 6-hydroxynaphtoïque, l'acide téréphtalique, l'acide isophtalique, l'acide 2,6-naphtalènedicarboxylique, l'acide 4,4'-bibenzoïque, l'hydroquinone, la chlorohydroquinone, la méthylhydroquinone, la t-butylhydroquinone, la phénylhydroquinone, la phénéthylhydroquinone, le 4,4'-biphénol, le résorcinol ou le 2,6-dihydroxynaphtalène.

9. Composition selon la revendication 1, dans laquelle ledit polymère cristallin liquide aromatique est essentiellement constitué par les unités répétées:
(a) structure (I), 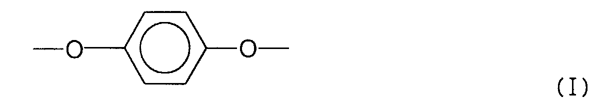
(b) structure (II), 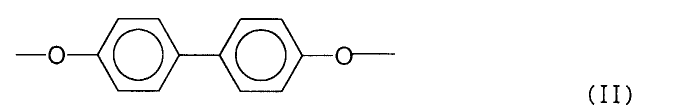
(c) structure (III), 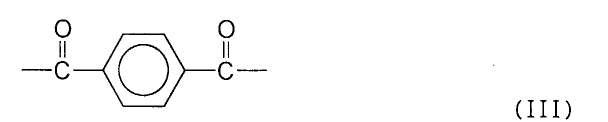
(d) structure (IV), 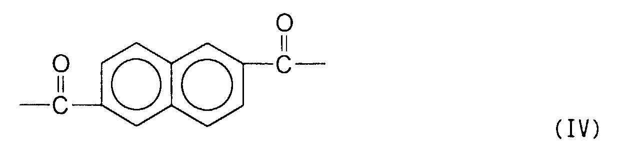 et
(e) structure (V) 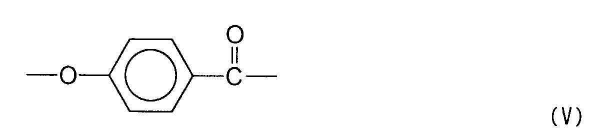
dans lesquels le rapport molaire de (I):(II) va de 0:100 à 100:0, dans lesquels le rapport molaire de (III):(IV) va de 85:15 à 15:85, dans lesquels le rapport molaire de la somme de (I) et de (II) à la somme de (III) et de (IV) est substantiellement 1:1, et dans lesquels il y a par ailleurs 100 à 600 moles de (V) pour 100 moles de (I) plus (II).

10. Composition selon la revendication 1, dans laquelle ledit polymère cristallin liquide aromatique est essentiellement constitué par les unités répétées:
(a) structure (VI) 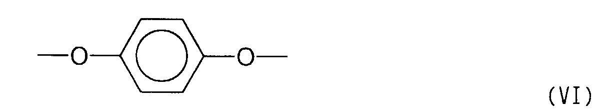 et
structure (VII) 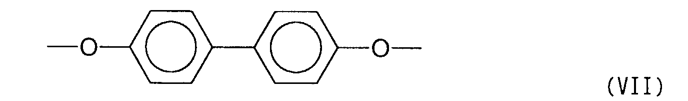
(b) structure (VIII) 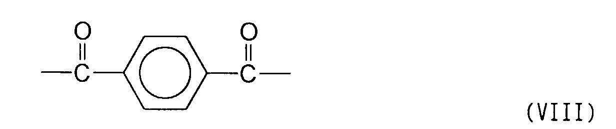
(c) structure (IX) 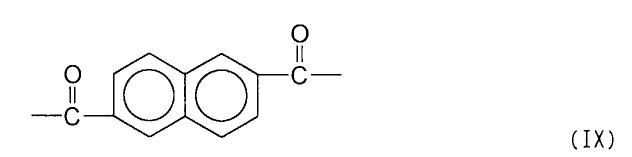
(d) structure (X) 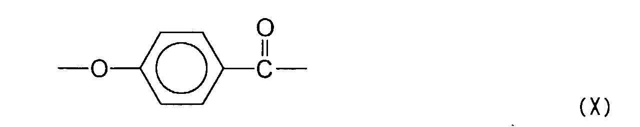 et
(e) structure (XI) 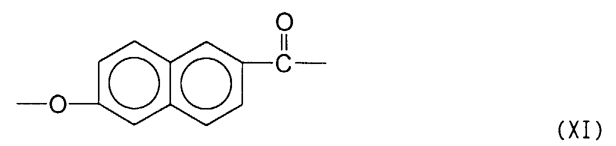
dans lesquels le rapport molaire de (VI):(VII) va de 0:100 à 100:0, le rapport molaire de (VIII):(IX) va de 25:75 à 90:10, le rapport molaire de la somme de (VI) et de (VII) à la somme de (VIII) et de (IX) est substantiellement 1:1, le rapport molaire de (X):(XI) va de 97:3 à 50:50, et le nombre de moles de (X) plus (XI) va de 100 à 600 moles pour 100 moles de (VI) plus (VII).

11. Composition selon la revendication 6, dans laquelle ledit polymère cristallin liquide aromatique est essentiellement constitué par les unités répétées:
(a) structure (I), 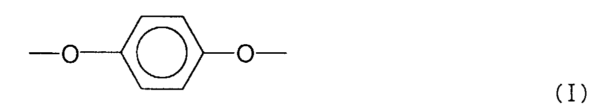
(b) structure (II), 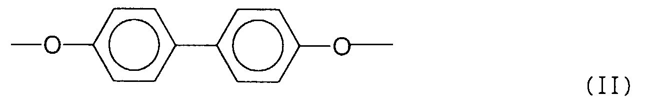
(c) structure (III), 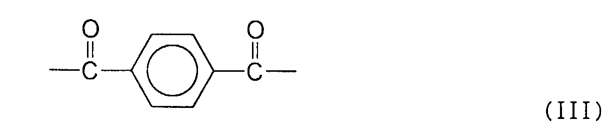
(d) structure (IV), 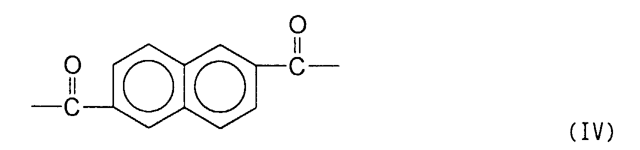 et
(e) structure (V) 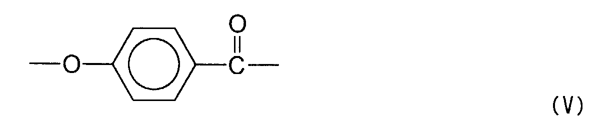
dans lesquels le rapport molaire de (I):(II) va de 0:100 à 100:0, dans lesquels le rapport molaire de (III):(IV) va de 85:15 à 15:85, dans lesquels le rapport molaire de la somme de (I) et de (II) à la somme de (III) et de (IV) est substantiellement 1:1, et dans lesquels il y a par ailleurs 100 à 600 moles de (V) pour 100 moles de (I) plus (II).

12. Composition selon la revendication 6, dans laquelle ledit polymère cristallin liquide aromatique est essentiellement constitué par les unités répétées:
(a) structure (VI) 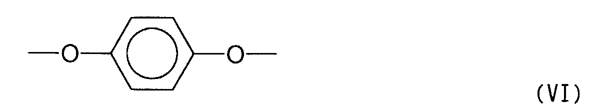 et
structure (VII) 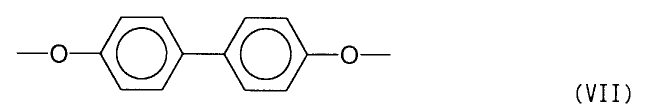
(b) structure (VIII) 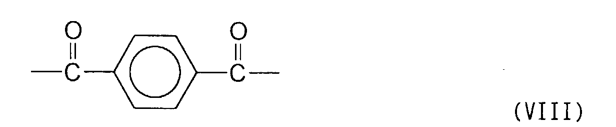
(c) structure (IX) 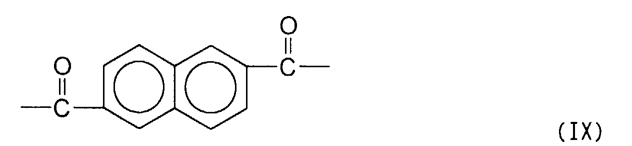
(d) structure (X) 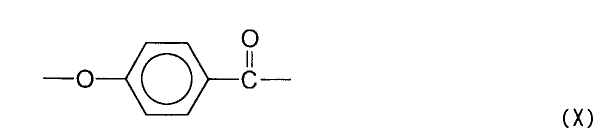 et
(e) structure (XI) 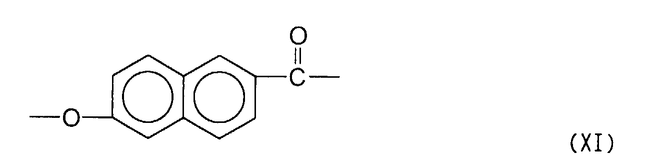
dans lesquels le rapport molaire de (VI):(VII) va de 0:100 à 100:0, le rapport molaire de (VIII):(IX) va de 25:75 à 90:10, le rapport molaire de la somme de (VI) et de (VII) à la somme de (VIII) et de (IX) est substantiellement 1:1, le rapport molaire de (X):(XI) va de 97:3 à 50:50, et le nombre de moles de (X) plus (XI) va de 100 à 600 moles pour 100 moles de (VI) plus (VII).

13. Composition selon la revendication 1, dans laquelle ledit polymère cristallin liquide aromatique est choisi dans le groupe constitué par un polyester, un poly(imide-ester) et un poly(amide-ester).

14. Composition selon la revendication 1, comprenant en outre de la fibre de verre.

15. Composition selon la revendication 1, comprenant en outre une charge choisie dans le groupe constitué par une fibre de verre, le noir de carbone, le dioxyde de titane, le talc et des combinaisons de ceux-ci.

16. Composition selon la revendication 1, dans laquelle ledit polymère cristallin liquide aromatique est un polyester.
